**Europäisches Patentamt**

(19) **European Patent Office**

**Office européen des brevets**

(11) Veröffentlichungsnummer: **0 194 333**

**A1**

(12) ## EUROPÄISCHE PATENTANMELDUNG

(21) Anmeldenummer: **85103023.9**

(51) Int. Cl.⁴: **G 01 D 21/02**
**G 06 K 7/10**

(22) Anmeldetag: **15.03.85**

(43) Veröffentlichungstag der Anmeldung:
**17.09.86  Patentblatt 86/38**

(71) Anmelder: **PRÜFTECHNIK DIETER BUSCH & PARTNER GmbH & CO**
**Postfach 51**
**D-8045 Ismaning(DE)**

(72) Erfinder: **Busch, Dieter**
**Am Isarberg 1**
**D-8045 Ismaning(DE)**

(74) Vertreter: **Lehn, Werner, Dipl.-Ing.  et al,**
**Hoffmann, Eitle & Partner Patentanwälte Arabellastrasse 4 (Sternhaus)**
**D-8000 München 81(DE)**

(84) Benannte Vertragsstaaten:
**DE FR GB IT SE**

(54) **Verfahren und Vorrichtung zur Ermittlung und Auswertung von Maschinen-Zustandsdaten.**

(57) Zur Ermittlung von Zustandsdaten an mit Meßstellen versehenen Maschinen wird eine Meßdatensonde an die Meßstelle angesetzt. Die abgetasteten Meßdaten werden in eine Auswerteschaltung mit Speicher übertragen und dort verarbeitet. In einem dem Meßschritt für die Ermittlung der Meßdaten an der betreffenden Meßstelle vorangehenden Meßschritt wird mittels einer Kennungsdaten-Abtastsonde (21) eine an jeder zu prüfenden Meßstelle (3 bzw. 4) vorgesehene Meßstellenkennung (7 bzw. 8) abgetastet. Die abgetasteten Kennungsdaten werden zur Adaptierung der Auswerteschaltung (38) an die betreffende Meßstelle der Maschine auf den Speicher der Auswerteschaltung übertragen. Der Speicher (46) weist meßstellenspezifische Speicherplätze auf, die durch die entsprechenden Kennungsdaten der Meßstelle aktiviert werden.

FIG 1

PRÜFTECHNIK Dieter Busch + Partner GmbH & Co.,
D-8045 Ismaning b/ München, Bundesrepublik Deutschland


<u>Verfahren und Vorrichtung zur Ermittlung und Auswer-
tung von Maschinen-Zustandsdaten</u>


Die Erfindung betrifft ein Verfahren zur Ermittlung
und Auswertung von Zustandsdaten an mit Meßstellen
versehenen Maschinen sowie eine Vorrichtung zur
Durchführung des Verfahrens, wobei eine Meßdatensonde
an die Meßstellen angesetzt und die abgetasteten Meßdaten in eine Auswerteschaltung mit Speicher übertragen und verarbeitet werden.

Solche Maschinen sind insbesondere rotierende Maschinensätze, wie z.B. Pumpen, Generatoren, Lüfter, Turbosätze, Kompressoren und andere. Solche rotierenden
Maschinensätze werden in mehr oder weniger regelmäßigen Zeitabständen auf ihr Laufverhalten hin untersucht und zwar hinsichtlich eventueller Veränderungen, die auf dem Schwingungsverhalten, auf Stoßimpulse bzw. Schallemissionsverhalten der Lager (Unwuchten) und auf Temperaturveränderungen am Maschinengehäuse und an den Lagern herrühren können. Eine Überwachung des Laufverhaltens solcher rotierender Maschinensätze ist von großer Bedeutung für die Sicherheit und Wartung und damit für die Lebensdauer solcher Maschinen.

Im allgemeinen werden Messungen an den Maschinen manuell durchgeführt. In der Regel werden die Meßstellen dieser Maschinen durch entsprechendes Wartungspersonal mit Hilfe von Prüf- und Meßgeräten manuell durchgeführt. Die ermittelten Meßdaten einer Meßstelle werden auf ein entsprechendes vorgedrucktes Formular übertragen. Für eine Schwingungsmessung ist z.B. bei einem entsprechenden Maschinenaggregat eine Meßfolge von zwölf Messungen notwendig. So ist es z.B. notwendig, auf der Antriebsseite und Betriebsseite eines Motors sowie auf der Antriebsseite und Betriebsseite einer mit dem Motor verbundenen Pumpe jeweils drei Messungen in X-Achsenrichtung, in Y-Achsenrichtung und in Z-Achsenrichtung durchzuführen. Jedes Meßergebnis muß aufgezeichnet werden. Auch ist es darüber hinaus notwendig, bereits am Ort selbst eine Bewertung der Meßergebnisse vorzunehmen, um z.B. plötzliche Veränderungen an einer Meßstelle bewerten zu können, falls beispielsweise Sofortmaßnahmen notwendig sind. Dies setzt nun voraus, daß das Wartungspersonal entsprechende qualifizierte Fachkenntnisse hat, um solche Veränderungen an den Meßstellen richtig zu bewerten. Zur Feststellung von Lagerschäden ist ein Stoßimpuls-Meßgerät bekannt, mit dessen Hilfe Lagerschäden von mit rotierenden Maschinensätzen versehenen Maschinen festgestellt werden können. Solche Lagerschäden gehören zu den häufigsten Ursachen von Maschinenausfällen. Folgeschäden, Betriebsstörungen und Produktionsverluste bedeuten einen nicht zu vernachlässigenden Kostenfaktor. Dieses bekannte Stoßimpulsmeßgerät empfängt mechanische Stöße, welche als kurzzeitige Druckwellen in Wälzlagern entstehen. Solche Druckwellen werden entsprechend ausgewertet. Ein erhöhter Stoßimpulswert zeigt einen Lagerfehler an. Es kann aber auch ein falscher Einbau, eine mangelnde Schmierung oder ein anderer Defekt vorliegen, der durch die erhöhten Stoßimpulswerte signalisiert wird. Vor der Durchführung einer Messung an einer Meßstelle muß der zu untersuchende Wellendurchmesser sowie die Drehzahl auf einer Geräteskala eingestellt werden. Diese von Hand eingegebenen Sollwerte dienen als Referenzpegel. Wird nun der Referenzpegel vom gemessenen Istwert überschritten, so kann dies beispielsweise durch eine optische Anzeige oder aber durch Tonsignale signalisiert werden.

Eine solche akustische Stoßimpulssonde wurde bei einem weiteren bekannten Analysiergerät weiter entwickelt. Dieses bekannte Analysiersonden-Meßgerät reagiert ebenfalls auf von Lagern ausgehende Stoßimpulse. Das bekannte Gerät enthält einen Mikroprozessor und eine Anzeige. Mit Hilfe des Analysiergerätes wird z.B. der Schmierungsgrad sowie die Dicke eines Ölfilmes zwischen den belasteten Lagerflächen ermittelt und digital in Form von Zwei-Kode-Ziffern gezeigt. Die beiden Kode-Ziffern beinhalten den Zustandskode und die Schmierzahl. Um dem Mikroprozessor eine Bewertungs- und Vergleichsmessung zu ermöglichen, werden zuvor in einem Speicher eine Vielzahl von empirisch ermittelten Datenwerten eingegeben und als Referenzwert abgespeichert. Vor der Durchführung einer Messung muß die Bedienungs- oder Wartungsperson der Maschine die Größe, den Typ und die Drehzahl des zu messenden Lagers in Form von Zwei-Kode-Ziffern in das Meßgerät eingeben. Für die Eingabe dieser lagerspezifischen Daten einer Maschine ist es notwendig, daß die Bedienungsperson diese Daten kennt und sie dann anschließend über eine entsprechende Tastatur eingibt. Hierzu benötigt die Bedienungsperson entsprechende Formulare und Listen als Vorlage für diese meßspezifischen Meßstellendaten.

Ein solches Eingabeverfahren vor der Durchführung der eigentlichen Messung ist zeitaufwendig und birgt in sich die Gefahr, daß unbeabsichtigt falsche Kennungsdaten für die Meßstelle eingegeben werden mit der Folgewirkung, daß ein falsches Vergleichsergebnis zwischen Ist- und Sollwert erzielt wird. In der Regel enthalten solche Meßformulare eine vorgegebene Reihenfolge der zu überprüfenden Meßstellen. Um rationell arbeiten zu können ist es für die Bedienungsperson notwendig, sich in der Reihenfolge der Messungen an diese auf dem Formular festgelegte Reihenfolge zu halten. Ein Abweichen von dieser Reihenfolge bedeutet einen zusätzlichen Zeitaufwand und erhöht die Fehlerquote hinsichtlich der Eingabe der Kennungsdaten. Aus diesem Grunde ist es nachteilig, daß die Bedienungsperson für jede Meßstelle erst die Zuordnung zum Sollwert schaffen muß. Daher ist es nachteilig, daß neben dem Meßgerät ein Werks- bzw. Installationsplan mitgenommen werden muß.

Der Erfindung liegt nun die Aufgabe zugrunde, ein Verfahren sowie eine Vorrichtung zur Durchführung des Verfahrens der eingangs genannten Art zu schaffen, mit dessen Hilfe es der Bedienungsperson ohne weiteres möglich ist, die zu untersuchenden Meßstellen automatisch abzutasten, ohne daß Kennungsdaten manuell eingegeben werden müssen. Auch soll die Möglichkeit der automatischen Weiterverarbeitung bestehen.

Die Aufgabe wird erfindungsgemäß dadurch gelöst, daß in einem dem Meßschritt für die Ermittlung der Meßdaten an der betreffenden Meßstelle vorangehenden Meßschritt mittels einer Kennungsabtastsonde eine an jeder Meßstelle vorgesehene Meßstellenkennung abgetastet wird und daß die abgetasteten Kennungsdaten zur Adaptierung und Kennzeichnung der Auswerteschaltung an die Meßstelle der Maschine auf den Speicher der Auswerteschaltung übertragen werden.

Hierdurch ergibt sich der Vorteil, daß die für die Messung an jeder Meßstelle notwendigen Kennungsdaten bereits an der Meßstelle selbst abtastbar angebracht sind und daß mit Hilfe einer Abtastsonde diese Kennungsdaten vor der Durchführung der Meßdatenabtastung gelesen und in die Auswerteschaltung übertragen werden. Als Meßdaten werden alle Arten von Meßdaten erfaßt, wie z.B. Temperaturwerte und Schwingungsamplitudenwerte und andere Maschinenmeßwerte. Diese Ablesung und Übertragung der Kennungsdaten in die Auswerteschaltung weist den Vorteil auf, daß die Bedienungsperson keine manuellen Eingabemaßnahmen durchzu-

führen hat und daß die Abtastung bzw. Lesung und Übertragung der Kennungsdaten automatisch erfolgt. Die Auswertung kann in einem tragbaren Gerät gewissermaßen vor Ort erfolgen. Zusätzlich besteht jedoch die Möglichkeit der Weiterleitung und Speicherung der Daten in eine zentrale Datenverarbeitungsanlage. Jede Meßstelle weist in ihrem Bereich eine lesbare Meßstellenkennung auf, die im ersten Operationsschritt durch die Kennungsdaten-Abtastsonde erfaßt werden. Mit Hilfe dieser automatischen Kennungsdatenablesung erfolgt die Adaptierung und Einstellung der Auswerteschaltung an die betreffende Meßstelle. Dies bedeutet im einzelnen, daß z.B. die Gerätenummer sowie die für die Meßstelle charakteristischen Datenwerte abgelesen und in dem Speicher der dezentralen und/oder zentralen Auswerteschaltung aktiviert werden.

Die darauffolgende Messung der Meßdaten der Meßstelle stellt dann gewissermaßen die Istwertmessung dar, welche auf die Sollwerteinstellung folgt. Mit Hilfe dieser automatischen Kennungsdatenabtastung jeder Meßstelle ergeben sich die weiteren Vorteile, daß nämlich der Zeitaufwand für die Messung und Festhaltung der Meßwerte für jede Meßwertstelle erheblich verringert wird. Außerdem wird die Zuordnung zwischen Meßstelle und Meßwertdaten fehlerfrei gemacht, da bedienungspersonbedingte Fehler soweit als möglich ausgeschaltet sind. Dadurch, daß die Ablesung der Kennungsdaten automatisch erfolgt gibt es keine Eingabe und Übertragungsfehler durch die Bedienungsperson. Ein weiterer Vorteil ist darin zu sehen, daß die Qualifikation der Bedienungsperson erheblich verringert werden kann. Die Zuordnung der einzelnen Meßwerte der Meßwertstellen an einer Maschine oder an verschiedenen Maschinen zu den einzelnen Meßstellen und Maschinen erfolgt innerhalb kürzester Zeit, da mit Hilfe der Kennungsdatensonde die meßstellenbedingten Meßdaten in entsprechender aufbereiteter digitaler Form, insbesondere als maschinenlesbare Signalfolge der Auswerteschaltung zur Verfügung steht. Somit können die genannten Daten in eine zentrale Datenverarbeitungsanlage übertragen werden und dort abgespeichert werden. Jede neue Messung bringt dann die betreffenden Daten auf den neuesten Stand (up-dating).

In vorteilhafter Weise werden mittels der Abtastsonde optische kapazitive Kennungen abgetastet, welche in entsprechender digitaler Form aufbereitet und kodiert sind.

Gemäß einer anderen Ausgestaltung werden mittels der Abtastsonde magnetische Kennungen abgetastet. Hierzu können Permanentmagnete oder Induktivitäten zur Schaffung eines kodierten Meßstellensignales herangezogen werden.

Sowohl die kapazitive als auch die induktive Abtastung weist den Vorteil einer geringen Störanfälligkeit gegenüber Verschmutzungen an der Maschine und gegenüber Störfelder der Maschinen auf. Die induktive Abtastung arbeitet mit elektromagnetischen Feldern und Resonanzkreisen.

In vorteilhafter Weise erfolgen der Abtastschritt und der Meßschritt mittels einer gemeinsamen Sonde, wobei die Umschaltung vom Kennungsdaten-Abtastschritt auf den Meßschritt mittels eines Druckschalters geschieht, der beim Andrücken der Meßdatensonde gegen die Meßstelle betätigt wird.

Die erfindungsgemäße Aufgabe wird auch durch ein Meßgerät zur Durchführung des erfindungsgemäßen Verfahrens gelöst, und zwar dadurch, daß eine Abtastsonde mit einer Abtast- und Leseeinheit zum Abtasten von Meßstellen-Kennungsdaten vorgesehen ist, wobei der Speicher meßstellenspezifische Speichereinheiten aufweist, die durch die entsprechenden Meßstellen-Kennungsdaten aktiviert werden.

In vorteilhafter Weise ist der Speicher als Schreib- und Lesespeicher Bestandteil eines Mikrocomputers, der außer einem Mikroprozessor einen dem Schreib- und Lesespeicher und einen Festwertspeicher aufweist, in dem Daten für das Ablaufprogramm des Mikroprozessors abgespeichert sind, wobei der Mikroprozessor beim Abtasten der Meßstellen-Kennungsdaten durch ein Kennungsdaten-Abtastprogramm gesteuert wird, während zum Ermitteln der Meßdaten durch Betätigung eines Meßbetriebsschalters ein Meßdatenprogramm aus dem Festwertspeicher abgerufen wird. In vorteilhafter Weise wird daher durch Abtasten der Meßstellen-Kennungsdaten der Mikroprozessor des Mikrocomputers zum Abrufen von für die Meßstelle im Schreib- und Lesespeicher abgespeicherten Sollwertdaten herangezogen. Diese werden in vorteilhafter Weise in einer Anzeigeeinrichtung der Bedienungsperson zur Anzeige gebracht. Auf diese Weise erhält die Bedienungsperson eine Anzeige der für die betreffenden Meßwertstelle wichtigen Daten. Beim nachfolgenden Abrufen der Istwert-Meßwertdaten durch Drücken der Sonde gegen die Meßstelle erfolgt aufgrund der Betätigung des Betriebsmeßschalter die Steuerung des Mikroprozessors durch das Meßdatenprogramm. Diese automatische Umschaltung des Mikroprozessors vom Kennungsdaten-Lesebetrieb in den Meßdaten-Lese- und Auswertebetrieb bedeutet eine große Verbesserung der Sicherheit und der Arbeitsgeschwindigkeit. Die im Meßdaten-Programmzyklus abgerufenen Meßdaten der Meßstelle werden zusammen mit den Sollwertdaten der Meßwertstelle verarbeitet und dann der Bedienungsperson in der Anzeigeeinrichtung angezeigt. Eine weitere Möglichkeit besteht darin, daß neben der Anzeige eine Abspeicherung der gesamten Daten einschließlich der Kennungsdaten auf einem nicht flüchtigen Speicher erfolgt. Ein solcher nicht flüchtiger Speicher kann beispielsweise ein Halbleiterspeicher oder aber auch ein Magnetspeicher sein.

Die endgültige Abspeicherung der Daten erfolgt zweckmäßigerweise in der zentralen Datenverarbeitungsanlage, in der die gesamten Daten abgelegt sind. So kann in vorteilhafter Weise datenmäßig der Lebenslauf einer Maschine festgehalten werden.

Der Meßbetriebsschalter wird automatisch beim Ansetzen der Meßdatensonde an die Meßstelle betätigt. In vorteilhafter Weise sind die Meßdatensonde und die Abtastsonde in einem gemeinsamen Gehäuse untergebracht.

Die Abtastsonde ist in vorteilhafter Weise als digital arbeitende optische Abtastsonde ausgebildet. Sie enthält eine Strahlungsquelle, einen strahlungsempfindlichen Empfänger sowie eine digitale Signalverarbeitungsschaltung. Sie ist insbesondere auf die Abtastung von strichkodierten Signalen angepaßt.

In vorteilhafter Weise weist die Abtastsonde an ihrer Spitze einen Lichtleitstab auf.

Gemäß einer weiteren Ausbildung enthält die Meßdatensonde einen akustischen Signalempfänger sowie eine Analog-Digital-Wandler-Schaltung. Der Betriebsmeßschalter ist in vorteilhafter Weise als Druck- oder Teleskopschalter ausgebildet, wobei er durch teleskopartiges Ineinanderschieben zweier Gehäuseteile der Sonde betätigt wird. In vorteilhafter Weise wird die Sonde an jeder Meßstelle über die entsprechend kodierten Meßstellen-Kennungen bewegt und damit die Auswerteschaltung auf die betreffende Meßstelle vorbereitet bzw. adaptiert. Beim anschließenden Erfassen der Meßdaten wird die Sonde gegen die Meßstelle gedrückt und hierbei durch teleskopartiges Ineinanderschieben der beiden Gehäuseteile der Betriebsmeßschalter betätigt und hierdurch die Mikrocomputer-Auswerteschaltung in den Meßdatenzyklus überführt.

Bei magnetischen oder kapazitiv kodierten Kennungsdaten weist die Abtastsonde einen Magnetkopf oder kapazitive Sonde auf, durch den die permanent an der Meßstelle der Maschine gespeicherten Kennungsdaten abgetastet werden.

Zweckmäßigerweise sind die entsprechend strichkodierten optischen oder kapazitiven oder magnetischen Kennungsdaten so vor der Meßstelle angeordnet, daß die Sonde nach Überqueren der Strichkodierung in Abtastrichtung gesehen sich über der Meßstelle befindet. Die Bedienungsperson braucht dann nur noch die Sonde in die Meßstelle zu drücken.

Gemäß einer weiteren Ausbildung ist der Sondenkopf sowohl Abtastsondenkopf als auch Meßdaten-Sondenkopf. Insbesondere weist der Sondenkopf einen zentralen Lichtleiter auf, der ringartig von einem aktustischen Stoßsignalempfangselement umgeben ist. Es ist aber auch denkbar, daß der Lichtleiter fest mit dem Empfangselement der akustischen Signaleinheit verbunden ist und somit eine doppelte Funktion ausübt. Der Lichtleiter ist so ausgebildet, daß er einerseits das Sendelicht über die Sondenspitze nach außen leitet und andererseits das reflektierte Licht zum entsprechenden Empfangselement zurückführt.

Gemäß einer weiteren Ausbildung ist die Meßsonde mit mindestens einer Signallampe zur Anzeige des Abtast- und/oder Meßbetriebes versehen. Gemäß einer anderen Ausgestaltung ist die Kennungsdaten-Abtastsonde als getrennte Einheit auf der Meßdatensonde befestigt. Auf diese Weise bilden die Abtastsonde und die Meßdatensonde eine Zwillingseinheit.

In vorteilhafter Weise wird als Kennungsdatenträger ein etikettartiger Träger verwendet, welcher an den Meßstellen auf die Maschine aufgebracht wird. Er kann z.B. selbstklebend ausgebildet sein. Dieser etikettartiger Träger enthält die Meßstellenkennungsdaten entweder in Form von Strich- oder Balkenkodierungen oder in Form von magnetischen Speichersignalen. Dieser etikettartige Träger kann aber auch als lesbarer Festwertspeicher ausgebildet werden. Bei Verwendnung von Balkenkodierungen sind diese in vorteilhafter Weise räumlich ausgebildet.

Im folgenden wird die Erfindung anhand von in den Figuren 1 bis 5 dargestellten Ausführungsbeispielen beschreiben. Es zeigen:

Fig. 1       eine perspektifische Darstellung eines Maschinenteiles mit einer Prüfsonde,

Fig. 2       ein tragbares Meßgerät mit einem Anzeige-feld,

Fig. 3       eine Zwillingssonde für die Abtastung von Kennungsdaten und Meßdaten,

Fig. 4       eine sowohl als Abtastsonde als auch als Meßdatensonde ausgebildete Sonde mit einem gemeinsa-men Gehäuse und

Fig. 5       eine schematische Darstellung der Auswerteschaltung.

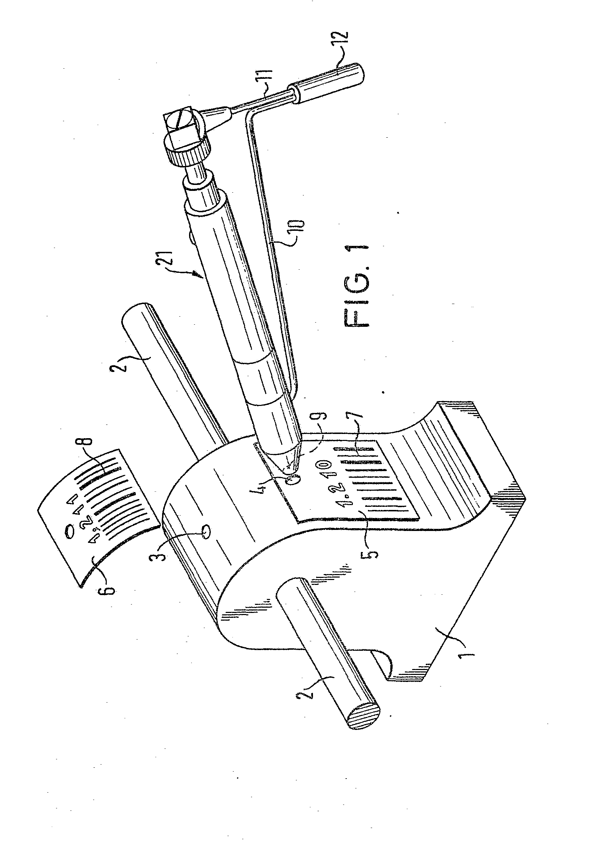

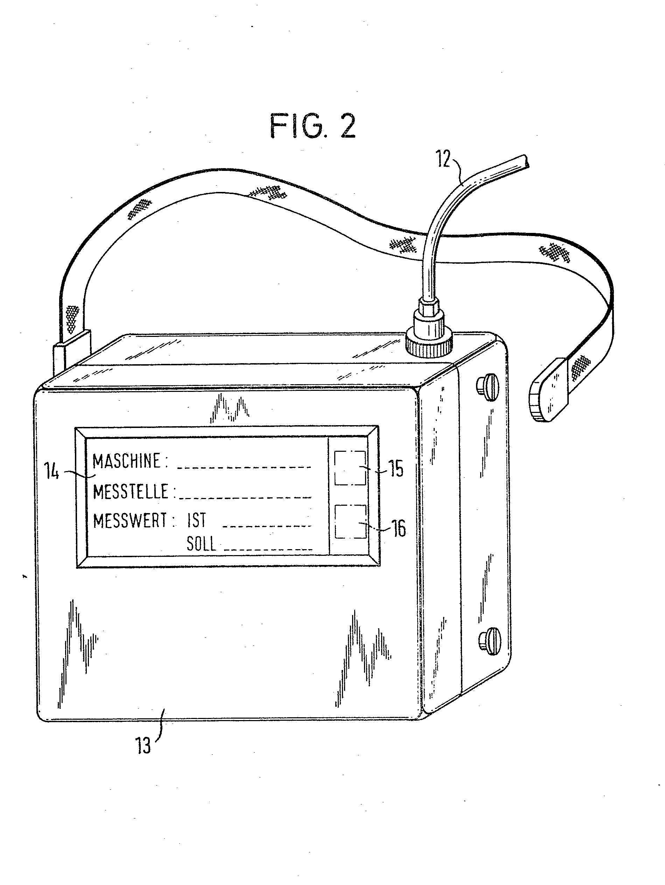

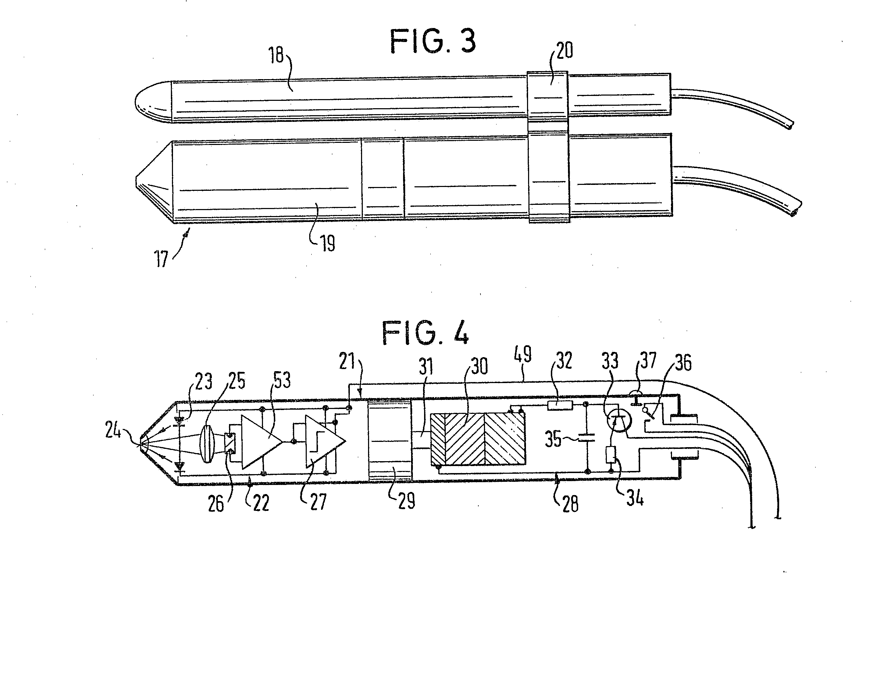

Gemäß Fig. 1 ist mit 1 eine zu untersuchende Maschine bezeichnet, welche mit einer sich drehenden Achse 2 versehen ist. Im Gehäuse befindet sich in nicht dargestellter Weise ein entsprechendes Lager. Am Gehäuse sind zwei Meßstellen 3 und 4 vorgesehen. Diese Meßstellen bestehen aus entsprechenden Bohrungen, die in nicht dargestellter Weise um einen entsprechenden Betrag in das Gehäuse hineingeführt sind. Jeder Meßstelle ist ein Kennungsdatenetikett 5 bzw. 6 zugeord- net. Die beiden Kennungsdatenetikette 5 und 6 tragen einerseits numerische Kennungsdatennummern und andererseits Strichkodierungen 7 bzw. 8, welche maschinenspezifische Daten der betreffenden Meßstelle beinhalten.

Mit 21 ist eine Sonde bezeichnet, welche sowohl zum Lesen der Strichkodierungen dient als auch zur Abta- stung von Meßdaten an der Meßstelle 3 bzw. 4. Die Spitze der Sonde 21 enthält eine Lichtdurchtrittsöffnung 9 für das Lesen der Strichkodierungen. Eine entsprechende Signalsteuerleitung ist mit 10 bezeichnet. Mit 11 ist eine weitere Leitung bezeichnet, welche dem Meßdatensondenteil zugeordnet ist. In nicht dargestellter Weise werden die Meßdaten mit Hilfe eines akustischen Signalempfängers ermittelt. Die beiden Leitungen 10 und 11 werden in einer gemeinsamen Leitung 12 weitergeführt.

In Fig. 2 führt diese gemeinsame Leitung zu einem Meßgerät 13, welches mit einem Anzeigefehl 14 versehen ist. Das Anzeigefeld besteht in nicht dargestell- ter Weise aus einem Flüssigkristallfeld und ist un- terteilt in eine Maschinenanzeige, in eine Meßstellenanzeige und in eine Meßwertanzeige. Die Maschinenanzeige zeigt das zu prüfende Gerät der Bedienungsperson an. Die Meßstellenanzeige gibt die Meßstellennummer am zu untersuchenden Gerät wieder. Die Meßwertanzeige gibt einerseits den Sollwert und andererseits den Istwert an der betreffenden Meßstelle wieder. Zwei Teilanzeigefelder 15 und 16 dienen zur Ja/-Nein-Anzeige einer Meßoperation. Der Bedienungsperson wird im betreffenden Anzeigefeld angezeigt, ob die Messung in Ordnung ist oder nicht.

Gemäß Fig. 3 ist eine Sondeneinheit 17 vorgesehen, die aus einer Kennungsdaten-Abtastsonde 18 und aus einer Meßdatensonde 19 besteht. Die Kennungsdaten-Abtastsonde 18 ist mittels einer Halterung 20 auf der Meßdatensonde rucksackartig angebracht. Beide Sonden bilden ein Zwillingssystem.

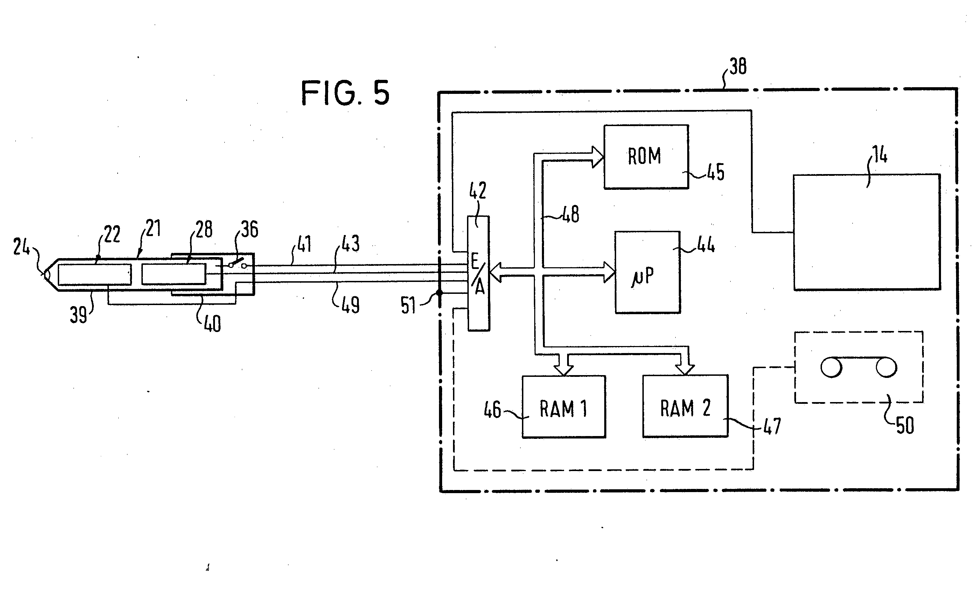

Gemäß Fig. 4 sind die Kennungsdaten-Abtastsonde und die Meßdatensonde in einem gemeinsamen Gehäuse 21 untergebracht. Die Kennungsdaten-Abtastsonde 22 besteht aus als Leuchtdioden ausgebildeten Lichtquellen 23, deren Lichtstrahlen durch eine Lichtdurchtrittsöffnung 24 nach außen gelangen, aus einer Sammellinse 25, aus einem Lichtempfänger 26, aus einem Verstärker 23 und aus einer Trigger- oder Schwellwertstufe 27. Die Lichtdurchtrittsöffnung 24 kann eine Lichtaustrittslinse aufweisen. In nicht dargestellter Weise sind zwischen den lichtemitierenden Dioden und der Lichtdurchtrittsöffnung Lichtleiter vorgesehen.

Mit 49 ist eine Kennungsdaten-Signalleitung bezeichnet. Die Kennungsdaten-Abtastsonde 21 wird auch als Kennungsdaten-Lesesonde bezeichnet.

Die akustische Stoßsignalempfangseinheit ist mit 28 bezeichnet. Sie ist an einem gehäusefesten Scheibenelement 29 angebracht. Das akustische Stoßsignalempfangselement ist mit 30 bezeichnet und über ein stegartiges Teil 31 an dem Scheibenteil 39 fixiert. An das akustische Stoßsignalempfangselement sind zwei Leitungen angeschlossen, von denen die eine über einen Widerstand 32 mit der Basis eines Transistors 33 verbunden ist, während die andere Anschlußleitung über einen Widerstand 34 mit dem Emitter des Transistors 33 verbunden ist. Mit 35 ist ein Kondensator bezeichnet. Die Kollektorleitung des Transistors 33 sowie die zweite Anschlußleitung des akustischen Stoßsignalempfangselementes führen zu dem Kabel 11.

Mit 36 ist ein Schalter bezeichnet, welcher durch einen Druckknopf oder Tastelement 37 betätigbar ist. Dieser Schalter 36 dient zur Umschaltung der Sonde vom Lesebetrieb in den Meßdaten-Ermittlungsbetrieb.

Gemäß Fig. 5 ist die einteilige Sonde 21 mit einer Auswerteschaltung 38 verbunden, welche in dem Meßgerät 13 von Fig. 2 untergebracht ist. In Fig. 5 sind die den Teilen von Fig. 4 entsprechenden Teile mit gleichen Bezugszeichen versehen. Das Gehäuse 21 der Sonde ist zweiteilig ausgebildet und besteht aus einem ersten zylindrischen Frontgehäuseteil 39 sowie aus einem hinteren Gehäuseteil 40, der das frontseitige Gehäuseteil 39 überlappt. Der mit 36 bezeichnete Betriebsumschalter wird betätigt, wenn die Sonde 21 gegen eine Meßstelle 3 bzw. 4 gedrückt wird, wobei beide Gehäuseteile um einen bestimmten Betrag teleskopartig ineinander geschoben werden. Bei dieser teleskopartigen Schiebephase wird der genannte Betriebsmeßschalter automatisch betätigt. Seine Steuerleitung ist mit 41 bezeichnet. Diese führt zu einer Eingabe- und Ausgabe-Schnittstellenschaltung 42 der Auswerteschaltung 38. Des gleichen ist die Steuerleitung 28 der Leseschaltung 22 mit der Eingabe- und Ausgabeschaltung 42 verbunden. Gleiches gilt für die Steuerleitung 43, welche zur akustischen Signalempfangsschaltung 28 führt.

Die Auswerteschaltung enthält einen Mikroprozessor 44, einen Festwertspeicher 45, zur Abspeicherung von Programmablaufdaten, einen ersten Schreib- und Lesespeicher 46 sowie einen zweiten Schreib- und Lesespeicher 47. Die genannten Schaltungstufen sind über einen Sammeldatenbus 48 miteinander verbunden. Der Schreib- und Lesespeicher 46 ist dem Kennungsdaten-Lese- und -Auswertebetrieb zugeordnet, während der Schreib- und Lesespeicher 47 den Daten für die Meßwerterfassung an den Meßstellen zugeordnet ist. Im Festwertspeicher 45 sind die Programmdaten sowohl für den Lesebetrieb als auch für den Meßwert-Erfassungs- und -Auswertebetrieb gespeichert.

Die Ein- und Ausgabeeinheit 42 ist mit dem Anzeigefeld 14 verbunden.

Die Ein- und Ausgabeeinheit 42 ist darüber hinaus mit einer Einheit 50 verbindbar, welche eine Magnetspeichereinrichtung verkörpert. Mit 51 ist ein Anschluß bezeichnet, über den die gespeicherten Daten einer nicht dargestellten zentralen Datenverarbeitungsanlage zur Weiterverarbeitung zugeführt werden, wo sie
stets zum Abruf bereitstehen.

Bei der Durchführung einer Meßoperation wird zunächst
das Meßgerät in nicht dargestellter Weise eingeschaltet. Dies bedeutet, daß die Lichtemissionselemente
aufleuchten. Sodann wird die Meßsonde über die Lichtbalken oder Strichkodierung 7 bzw. 8 der Meßstelle 4
bzw. 3 bewegt und die digital abgetasteten Daten über
die Steuerleitung 49 der Ein- und Ausgabeschnittstelle 42 zugeführt. Von dort gelangen die Daten in den
zugeordneten Schreib- und Lesespeicher 46 und werden
unter Mitwirkung des entsprechenden Ablaufprogrammes
für den Lesebetrieb durch den Mikroprozessor 44 verarbeitet und abgespeichert. Dies bedeutet, daß die
durch die Strichkodierung festgehaltenen bzw. gespeicherten, meßstellenspezifischen Daten im Schreib- und
Lesespeicher 46 abgespeichert sind. Anschließend wird
die Sonde an die zugeordnete Meßstelle geführt und
durch Druckbetätigung infolge teleskopartiger Zusammenschiebung der Sonde der Schalter 36 geschlossen.
Mit Schließen des Betriebsmeßschalters 36 wird aus
dem Festwertspeicher 45 das Meßwertabtastprogramm abgerufen, welches an die Stelle des Kennungsdaten--
Leseprogrammes tritt. Hierbei wird die akustische Signalempfangseinheit 30 aktiviert. Die gemessenen Meßwerte werden über die Eingabe- und -Ausgabeschnittstelle 42 dem Mikroprozessor 44 und dem zugeordneten
Schreib- und Lesespeicher zugeführt. Sodann erfolgt
eine vergleichende Operation zwischen Ist- und Sollwerten. Das Ergebnis wird in nicht dargestellter Weise im Anzeigefeld 14 angezeigt. Im Anzeigefeld 14 wird, wie bereits eingangs erwähnt darüber hinaus angezeigt, um welches Maschinenteil und um welche Meßstelle es sich jeweils handelt.

Nach Druckentlastung der Sonde 21 wird wieder automatisch auf den Lesebetrieb umgeschaltet. Die Bedienungsperson kann dann die nächste Meßstelle erfassen. Die einzelnen Daten werden dann am Ende einer Meßroutine auf die zentrale Datenverarbeitungsanlage übertragen.

P a t e n t a n s p r ü c h e

1.    Verfahren zur Ermittlung und Auswertung von Zustandsdaten an mit Meßstellen (3, 4) versehenen Maschinen, wobei eine Meßdatensonde (21) an die Meßstellen (3, 4) angesetzt wird und wobei die abgetasteten Meßdaten in eine Auswerteschaltung (28) mit
Speicher übertragen und dort verarbeitet werden,
d a d u r c h   g e k e n n z e i c h n e t ,  daß in einem
dem Meßschritt für die Ermittlung der Meßdaten an der
betreffenden Meßstelle vorangehenden Meßschritt mittels einer Kennungsdaten-Abtastsonde (21) eine an jeder Meßstelle (3 bzw. 4) vorgesehene Meßstellenkennung (7 bzw. 8) abgetastet wird und daß die abgetasteten Kennungsdaten zur Adaptierung der Auswerteschaltung (38) an die betreffende Meßstelle der Maschine auf den Speicher der Auswerteschaltung übertragen werden.

2.    Verfahren nach Anspruch 1,
d a d u r c h   g e k e n n z e i c h n e t ,  daß mittels
der Kennungsdaten-Abtastsonde optische oder kapazitive oder magnetische oder induktive Kennungen abgetastet werden.

3.    Verfahren nach Anspruch 1 oder 2,
d a d u r c h   g e k e n n z e i c h n e t ,  daß der Ken-
nungsdaten-Abtastschritt und der Meßschritt mittels
einer gemeinsamen Sonde erfolgen und daß die Umschal-

tung vom Kennungsdaten-Abtastschritt auf den Meßschritt automatisch beim Andrücken der Meßdatensonde
an die Meßstelle erfolgt.

4. Verfahren nach einem der Ansprüche 1 bis 3,
dadurch  g e k e n n z e i c h n e t , daß die Verarbeitung der Meßdaten und der Kennungsdaten der Meßschritte in einem tragbaren Meßgerät erfolgt.

5. Verfahren nach Anspruch 4,
dadurch  g e k e n n z e i c h n e t , daß eine Weiterverarbeitung und Abspeicherung der Meßdaten und
Kenndaten in einer zentralen Verarbeitungsvorrichtung, insbesondere in einer zentralen Datenverarbeitungsanlage erfolgt.

6. Meßgerät zur Durchführung des Verfahrens nach
einem der Ansprüche 1 bis 5, mit einer Meßdatensonde
(21) enthaltend einen Meßdatenempfänger (30) und eine
Auswerteschaltung (38) mit Speicher zur Aufnahme und
Auswertung der von der betreffenden Meßstelle (3 oder
4) empfangenen Meßdaten,
dadurch  g e k e n n z e i c h n e t , daß eine
Kennungsdaten-Abtastsonde (22) mit einer Abtast- und
Leseeinheit zum Abtasten von Meßstellen-Kennungsdaten
vorgesehen ist und daß der Speicher (46) meßstellenspezifische Speicherplätze aufweist, die durch die
entsprechenden Kennungsdaten der Meßstelle aktiviert
werden.

7. Meßgerät nach Anspruch 6,
dadurch  g e k e n n z e i c h n e t , daß der Speicher als Schreib- und Lesespeicher (46) Bestandteil eines Mikrocomputers mit Mikroprozessor (44) ist, der außer dem Schreib- und Lesespeicher (46, 47) einen Festwertspeicher (45) aufweist, in dem Daten für das Ablaufprogramm des Mikroprozessors (44) abgespeichert sind, und daß der Mikroprozessor (44) beim Abtasten der Meßstellen-Kennungsdaten durch ein Kennungsdaten-Abtast- und -Leseprogramm gesteuert wird, während zum Ermitteln der Meßdaten durch Betätigung eines Betriebsmeßschalters (36) ein Meßdaten-Abtastprogramm aus dem Festwertspeicher (45) abgerufen wird.

8.    Meßgerät nach Anspruch 6 oder 7, dadurch g e k e n n z e i c h n e t , daß die Meßdatensonde und die Kennungsdaten-Abtastsonde in einem gemeinsamen Gehäuse (21) untergebracht sind.

9.    Meßgerät nach einem der Ansprüche 6 bis 8, dadurch g e k e n n z e i c h n e t , daß die Kennungsdaten-Abtastsonde (22) als digital arbeitende optische Abtastsonde ausgebildet ist und eine Strahlungsquelle (23) einen strahlungsempfindlichen Empfänger (26) sowie eine digitale Signalverarbeitungsschaltung (23, 27) enthält.

10.    Meßgerät nach einem der Ansprüche 6 bis 9, dadurch g e k e n n z e i c h n e t , daß die Kennungsdaten-Abtastsonde an ihrer Spitze (24) mindestens einen Lichtleitstab aufweist.

11.    Meßgerät nach einem der Ansprüche 6 bis 10, dadurch g e k e n n z e i c h n e t , daß die Meßdatensonde einen akustischen Signalempfänger, insbesondere einen Stoßsignalempfänger sowie eine A/D-Wandlerschaltung aufweist.

12.   Meßgerät nach einem der Ansprüche 6 bis 11, dadurch  g e k e n n z e i c h n e t , daß der Betriebsmeßschalter (36) als Druck- oder Teleskopschalter ausgebildet ist und durch teleskopartiges Ineinanderschieben zweier Gehäuseteile der Sonde betätigbar ist.

13.   Meßgerät nach einem der vorhergehenden Ansprüche 6 bis 12, dadurch  g e k e n n z e i c h n e t , daß die Kennungsdaten-Abtastsonde einen Kapazitätsoder Magnetlesekopf oder Induktionslesekopf aufweist, durch den kapazitive oder magnetische oder induktive Kennungsdaten an der Meßstelle der Maschine abgetastet werden.

14.   Meßgerät nach einem der Ansprüche 6 bis 13, dadurch  g e k e n n z e i c h n e t , daß der Sondenkopf sowohl Abtastsondenkopf als auch Meßdatensondenkopf ist.

15.   Meßgerät nach Anspruch 14, dadurch  g e k e n n z e i c h n e t , daß im Sondenkopf ein Lichtleiter vorgesehen ist, der insbesondere von einem Schallempfänger ringartig umgeben ist.

16.   Meßgerät nach einem der Ansprüche 6 bis 15, dadurch  g e k e n n z e i c h n e t , daß die Sonde mit mindestens einer Signallampe zur Anzeige des Kennungsdaten-Abtastbetriebes und/oder Meßbetriebes versehen ist.

17. Meßgerät nach einem der Ansprüche 6 bis 16, dadurch g e k e n n z e i c h n e t , daß die Kennungsdaten-Abtastsonde als gesonderte Sonde auf der Meßdatensonde angebracht ist.

18. Meßgerät nach einem der Ansprüche 6 bis 17, dadurch g e k e n n z e i c h n e t , daß der Mikrocomputer mit Speicher (46) in einem tragbaren Meßgerät angeordnet ist, das einen Anschluß aufweist, für die Übertragung der Kennungsund Meßdaten in eine zentrale Datenverarbeitungsanlage.

19. Kennungsdatenträger zur Durchführung des Verfahrens nach einem der Ansprüche 1 bis 5, dadurch g e k e n n z e i c h n e t , daß der Kennungsdatenträger (5, 6) als etikettartiger Träger ausgebildet ist, welcher als optischer oder kapazitiver oder induktiver Träger von digitalen Meßstellen-Kennungsdaten in Form von Strich- oder Balken-kodierten Kennungen oder von kapazitiven Kennungen oder von induktiven Kennungen oder als magnetischer Speicher oder als lesbarer Festwertspeicher ausgebildet ist.

20. Kennungsdatenträger nach Anspruch 19, dadurch g e k e n n z e i c h n e t , daß die Balken-Kodierungen räumlich ausgebildet sind.

FIG. 1

# FIG. 2

# FIG. 3

# FIG. 4

FIG. 5

0194333

0194333

**EUROPÄISCHER RECHERCHENBERICHT**

Europäisches
Patentamt

Nummer der Anmeldung

EP 85 10 3023

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| Y | EP-A-0 124 434 (SANGAMO) <br><br> * Zusammenfassung * <br><br> --- | 1,2,4-9,13,14,19 | G 01 D 21/02 <br> G 06 K 7/10 |
| Y | DE-A-2 941 123 (USM) <br> * Seite 1 * <br><br> --- | 1-10 | |
| Y | EP-A-0 128 123 (SECURITAS) <br><br> * Ansprüche 1-11; Seite 8, Zeilen 8-10 * <br><br> --- | 1-10, 14,16, 19 | |
| A | DE-A-3 214 575 (SIEMENS) <br> * Figur 1 * <br><br> --- | 17 | **RECHERCHIERTE SACHGEBIETE (Int. Cl.4)** |
| A | GB-A-2 018 069 (KENT) <br><br> --- | | G 01 D <br> G 06 K <br> G 01 R <br> G 06 M |
| A | US-A-4 056 850 (DYNAMICS RESEARCH) <br><br> ----- | | |

_Der vorliegende Recherchenbericht wurde für alle Patentansprüche erstellt_

| Recherchenort | Abschlußdatum der Recherche | Prüfer |
|---|---|---|
| DEN HAAG | 23-10-1985 | HOORNAERT W. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82